# EUROPEAN PATENT SPECIFICATION

(11) **EP 0 433 308 B1**
(45) Date of publication and mention of the grant of the patent: **10.07.1996**
(21) Application number: 89909506.1
(22) Date of filing: 16.08.1989
(51) Int. Cl.: H04Q 7/20, H04M 1/72

(54) **TWO-WAY RADIO COMMUNICATIONS SYSTEM HAVING SELECTABLE OPERATING MODES**
ZWEIRICHTUNGSFUNKÜBERTRAGUNGSSYSTEM MIT WÄHLBAREN BETRIEBSZUSTÄNDEN
SYSTEME DE RADIOCOMMUNICATIONS DUPLEX A DEUX MODES DE FONCTIONNEMENT SELECTIONNABLES

(30) Priority: 12.09.1988 US 242838
(43) Date of publication of application: 26.06.1991
(73) Proprietor: MOTOROLA, INC., Schaumburg, IL 60196 (US)
(72) Inventor: PATSIOKAS, Stelios, J., Plantation, FL 33322 (US); MOORE, Morris, A., North Lauderdale, FL 33068 (US); JOHNSON, Brian, K., A., Coral Springs, FL 33065 (US)
(74) Representative: Dunlop, Hugh Christopher
(86) International application number: US8903463
(87) International publication number: WO9003068

(56) References cited:
- US-A- 4 172 969
- US-A- 4 266 098
- US-A- 4 336 524
- US-A- 4 644 351
- US-A- 4 680 785
- US-A- 4 748 655
- US-A- 4 783 800
- PATENT ABSTRACTS OF JAPAN vol. 012, no. 111 (E-598)8 April 1988 & JP-A-62 241 443 ( NTT )
- JAPAN TELECOMMUNICATION REVIEW. vol. 28, no. 4, October 1986, TOKYO JP pages 271 - 280; IASAYAMA ET AL.: 'Voice Storage Services'

## Description

### BACKGROUND of the INVENTION

This invention pertains to radio communication systems and, more particularly, to a two-way radio communication system in which individual remote radio transceiver units can be placed in one of a plurality of simulated telephone answering machine modes.

Telephone answering machines have several different modes of operation. In one mode, for example, a caller may be invited to record a message immediately upon establishing a connection with the called telephone unit. In another mode, an attempt is made to establish voice communications between the caller and the called unit by "ringing" the called unit. If the called unit fails to answer after a predetermined number of rings, the caller is invited to record a message. In either of these two modes of operation, the operator of the called unit can usually monitor the incoming message as it is being recorded. While monitoring the incoming message, the operator of the called unit usually has the option of interrupting the message by picking up the call, thereby establishing voice communications between the caller and the called unit.

It would be desirable if a two-way radio communication system could be designed that emulated the operation of a telephone answering machine in a two-way radio communication system. Accordingly, the invention described below provides the above described telephone machine operating modes and features. This invention also provides additional features not available in answering machines, such as the ability to record messages when a remote radio transceiver unit is out of range of its base station, or when the remote unit is busy with another call. This invention also permits a call originator to override the message recording process and establish a direct voice communication connection to the called unit.

Patent Abstracts of Japan, vol. 012, no. 111 (E-598) 8 April 1988 & JP-A-62 241 443 discloses mobile communication equipment comprising a mobile terminal (8) that sends an indicator to switch from an operating mode in which a message from a caller is stored to an operating mode in which the stored message is reproduced and also discloses a radio base station that communicates with a mobile terminal subscriber.

### SUMMARY of the INVENTION

In accordance with a first aspect of the invention there is provided a radio communications system as claimed in claim 1.

In accordance with a second aspect of the invention there is provided a radio base station as claimed in claim 4.

In accordance with a third aspect of the invention there is provided a remote radio unit as claimed in claim 8.

### BRIEF DESCRIPTION of the DRAWINGS

Fig. 1 is a block diagram of the radio base station.

Fig. 2 is a block diagram of the remote radio unit.

Figs. 3A-3C include a flow chart of the software for the base station controller.

Fig. 4 is a flowchart of the software for the remote unit controller.

### DESCRIPTION of the PREFERRED EMBODIMENT

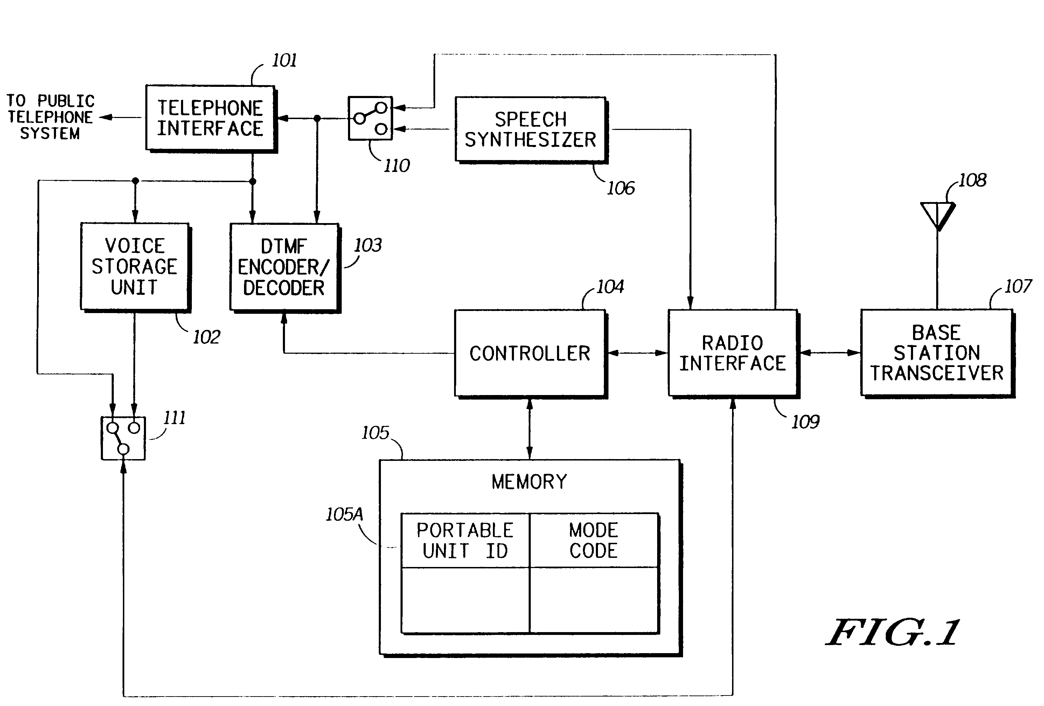

Fig. 1 is a block diagram of the base station. Referring to this figure, a well known telephone interface 101 is connected to one or more telephone lines of a public or private telephone system. The particular type of telephone interface selected will depend upon the requirements of the installation site. For the purpose of illustration, however, we shall assume a line level telephone interface, although other well known types of telephone interfaces may also be utilized. Preferably, telephone interface 101 is capable of establishing connections to more than one telephone number.

The audio output of telephone interface 101 is connected to the inputs of a voice storage unit 102 and a well known dual tone multi-frequency (DTMF) encoder/decoder 103. Voice storage unit 102 is well known in the art and is preferably of the continuously variable slope delta modulation (CVSD) or adaptive differential pulse code modulation (ADPCM) type. In the alternative, an analog to digital (A/D) and digital to analog (D/A) converter can be substituted for voice storage unit 102, with the digitized voice messages being stored in memory 105.

Controller 104 is preferably a well known microprocessor, microcontroller or microcomputer, although any programmable computer type device may also be suitable. For simplicity, the only illustrated interconnections between circuit elements are for signal flow. In addition to these signal lines, non-illustrated control lines interconnect controller 104 to each and every other element (101 - 103 and 105 - 111) in Fig. 1. Memory 105 is a well known memory device such as random access memory (RAM), into which a table of operating mode information 105A is stored.

Mode table 105A is an array of ordered pairs of numbers, the first number in each ordered pair being a unique number indicative of a particular remote unit (i.e., a remote unit "identification number" or "address"), while the second number is indicative of the current communication or operating mode of the corresponding remote unit. These modes include an "Open Communication" mode, a "Message Storage" or "Meeting" mode, and a "Call Screening" mode. In addition to the operating mode, the second number may also indicate the present status of a particular remote unit. For example, if a remote unit is presently communicating with another remote unit or telephone number, a code would be stored in table 105A to indicate a "Busy" status for this particular remote unit. Similarly, if a remote unit is out of range of the base station, an "Out of Range" status indication may be stored in the table for that particular remote unit.

In the Message Storage mode, a remote unit or telephone call originator is informed of the current operating mode of the called unit by sending an appropriate prerecorded message to the call originator from speech synthesizer 106. This prerecorded message will invite the call originator to store a voice or alphanumeric message for later retrieval by the called unit. When the operating mode of a particular remote unit changes from the Message Storage mode to the Open Communication mode (or, optionally, to the Call Screening mode) any stored messages may be automatically transmitted to the remote unit.

For emergency calls, each remote unit operator may provide selected individuals with a preprogrammed "Override Code." Thus, if a call originator is informed that a particular remote unit is in the Message Storage mode, and the call originator enters the appropriate Override Code through the call originator's telephone or remote unit keypad, voice communications will be established between the call originator and the called remote unit, despite the fact that the remote unit is currently in the Message Storage mode.

In the Open Communication mode, normal voice communications may be established between the call originator and the called remote unit in a conventional, well known manner. If the called remote unit is currently communicating with another remote unit or telephone number, i.e., if the called remote unit is "busy," the caller is informed of the current status of the called unit and is invited to store a message as in the Message Storage mode, or the caller is invited to call back at a later time. Similarly, if the called unit is out of radio range (or simply out of service), or the remote unit operator fails to respond to a call within a predetermined period of time, the call originator is also invited to store a message.

When a base station directs a transmission to a particular remote unit, the remote unit automatically responds to that transmission by transmitting an acknowledgement code back to the base. Transmission of this acknowledgement code occurs regardless of any action taken by the remote unit operator. Thus, the base station assumes that the called remote unit is out of range when no acknowledgement code is received in response to a base station transmission directed to that unit. If the remote unit is within radio range and only the acknowledgement code is received within a predetermined period of time, the call is assumed to be "unanswered" and the call originator is invited to store a message as in the Message Storage mode.

In the Call Screening mode, the call originator is informed of the current operating mode of the called remote unit and is invited to store a message as in the Message Storage mode. In this mode, however, the message is also forwarded (i.e., transmitted) to the called remote unit and the called remote unit can "pickup" the call and establish normal voice communications by interrupting the message. Interruption of the message may be accomplished by entering an appropriate code through the keypad of the remote unit, or simply activating the transmitter of the remote unit through the "push-to-talk" switch. In the former case, the remote unit's controller detects that a "pickup" code has been entered through the keypad and the controller generates a corresponding digital code for transmission back to the base station. Upon receipt of the pickup code, the base station controller interrupts the message storing process and establishes a voice communication path between the call originator and the called remote unit.

Speech synthesizer 106 includes a well known digital to analog converter, preferably of the CVSD or ADPCM type, and a well known memory device, such as a programmable read only memory (PROM), in which selectable, pre-programmed digitized voice messages are stored. A well known base station transceiver 107 and antenna 108 includes one or more radio transmitters and one or more radio receivers. Transceiver 107 is connected to the other circuits through a well known radio interface that includes appropriate switches and driver circuits. As with telephone interface 101, radio interface 109 is dependent upon the particular type of transceiver being used at a particular installation site.

Switch 110 selects either the audio output of radio interface 109 or the output of speech synthesizer 106 as an audio input to telephone interface 101. Similarly, switch 111 selects either the audio output of telephone interface 101 or the output of voice storage unit 102 as an audio input to radio interface 109.

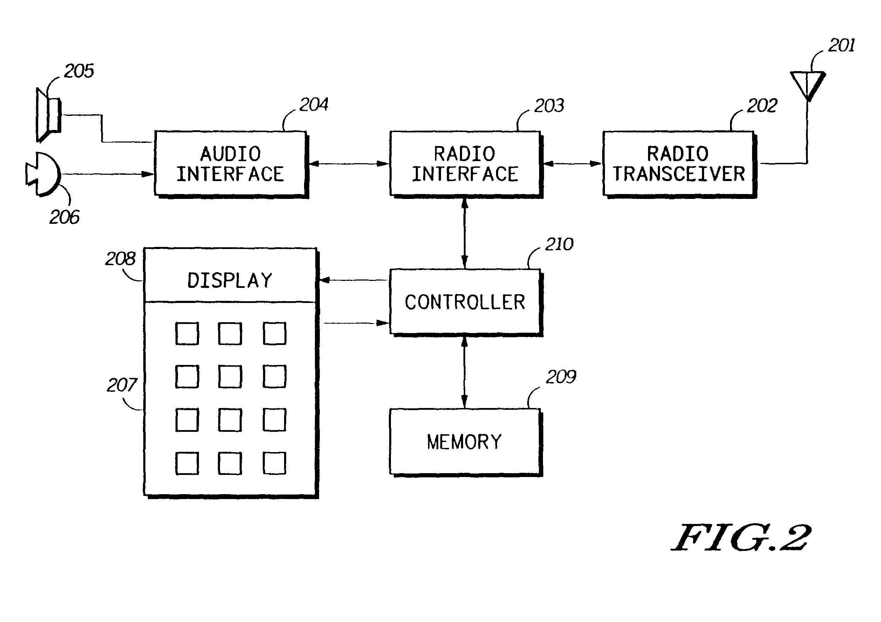

Fig. 2 is a block diagram of a remote radio unit, for example, a mobile or portable transceiver. Referring to this figure, the remote unit includes a well known radio transceiver 202 which is coupled to an antenna 201. The audio output and modulation input of radio transceiver 202 are coupled to a well known radio interface 203. A well known audio interface circuit 204 includes appropriate audio amplifiers to drive speaker 205, and appropriate microphone amplifiers to amplify the signal from microphone 206. These audio signals are coupled to radio interface 203. A well known keypad 206 and display 208 provide a means for entering and displaying digital information, respectively. One function of keypad 206 and display 208 is to provide a means for selecting a particular communications or operating mode. To select a particular mode, the operator depresses a particular predetermined key or pattern of keys on the keypad to transmit a new mode code to the base station. In the alternative, a simple switch may be used to select the operating mode of the remote unit. The actuation of this key or pattern of keys is sensed by controller 210 and an appropriate digital code is generated and transmitted back to the base station through radio interface 203, transceiver 202 and antenna 201. Controller 210 also generates a unique digital remote unit identification or "address" code which is transmitted along with the operating mode code.

Controller 210 is preferably a microprocessor or microcomputer, although any computer type device may be suitable. Memory 209 is preferably a random access memory (RAM), although other types of memory may also be suitable. As in Fig. 1, the only interconnections illustrated in Fig. 2 are for signal flow. In addition to these signals, non-illustrated control lines interconnect controller 210 to each and every element (202 - 207 and 209) in Fig. 2.

### Software

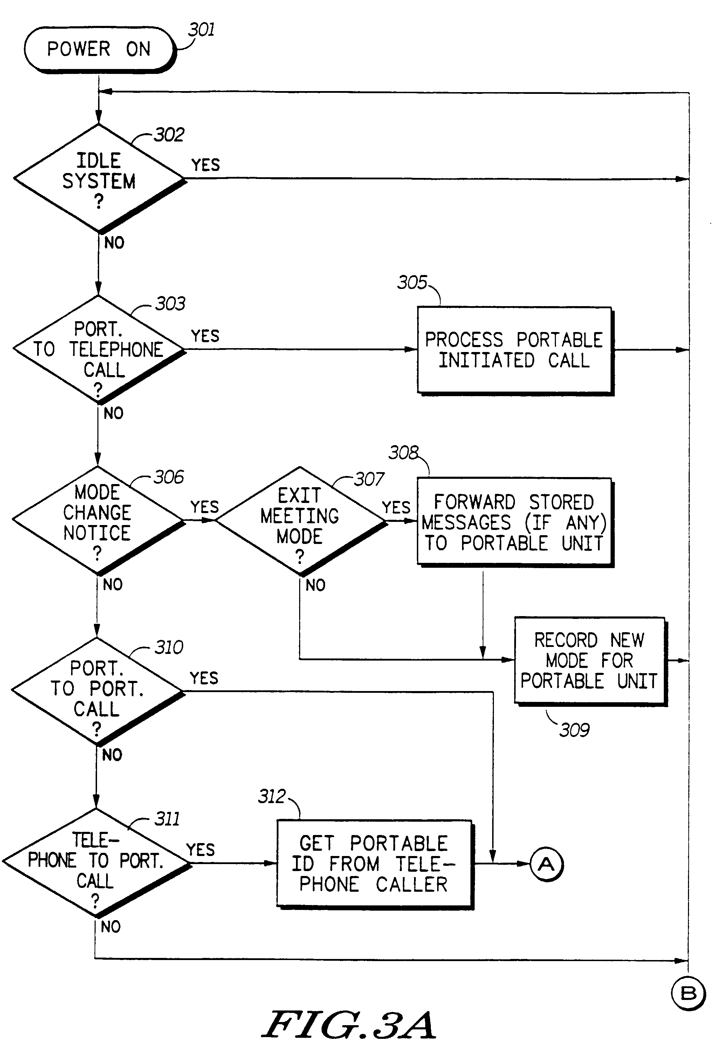

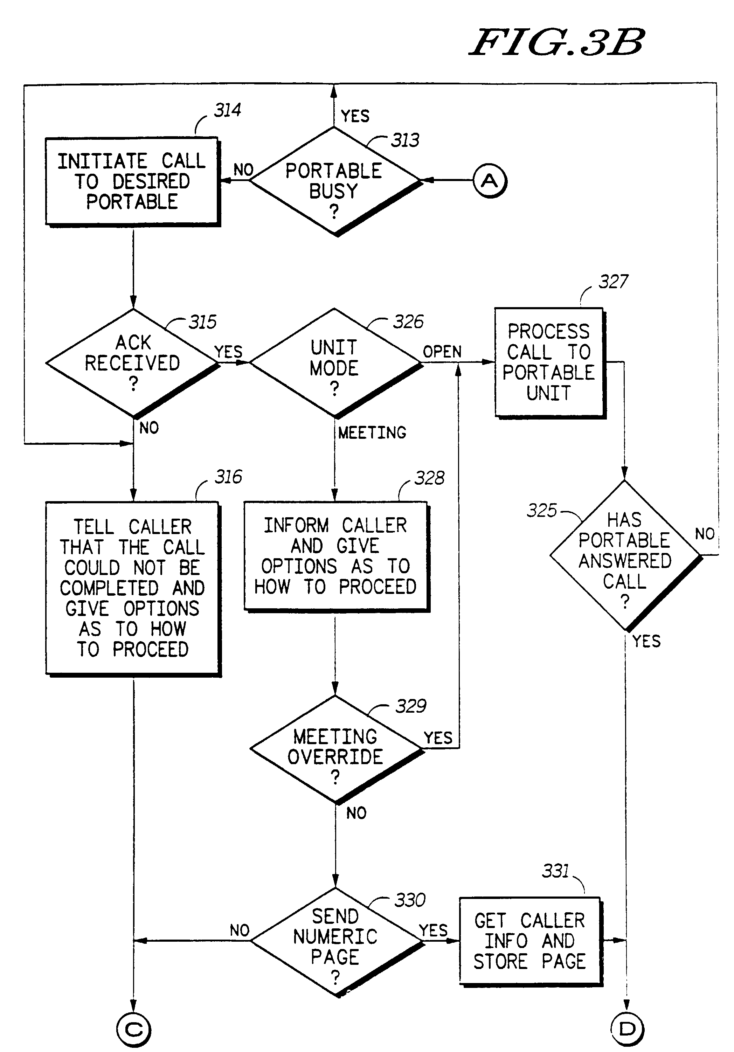

The term "portable" unit is used in the flowcharts of Figs. 3A-3C because, in the typical application, the remote unit is a portable unit. It should be understood, however, that other types of remote units are implied, such as transportable, mobile or fixed remote units.

A flow chart of the software for base station controller 104 is illustrated in Figs. 3A-3C. Referring to these figures, the program begins at step 301. If an event has occurred in the system that requires some action by the controller, the program branches at step 302 to step 303. Otherwise, the program remains at step 302 until some controller action is required. If a remote unit has requested a connection to a particular telephone number, the program branches at step 303 to step 305 wherein the call is processed. Otherwise, the program branches to step 306.

To request a telephone call, the operator of the remote unit enters the appropriate code on the remote unit's keypad, followed by the telephone number. This information is encoded by the remote unit and transmitted to the base station. Upon receiving and decoding this information, base station controller 104 sends the appropriate commands to telephone interface 101 to initiate the call. If the called telephone answers, the controller sends the appropriate commands to telephone interface 101, switch 110, radio interface 109 and base station transceiver 107 to establish voice communications between the remote unit and the called telephone.

If a remote unit has transmitted an operating mode change, the program branches at step 306 to step 307. At step 307, the program branches to step 308 if the mode has been changed from the Message Storage mode to some other mode. At step 308, any messages that were stored for this particular remote unit are transmitted or "forwarded" to the remote unit. This includes both stored voice messages and stored digital messages. If the mode change is from any other mode (i.e., any mode except the Message Storage mode) to another mode, the program branches at step 307 to step 309 wherein the new operating mode is stored in table 105A. (Table 105A of Fig. 1 is a schematic representation of an operating mode storage table of memory 105 in which the unit ID of each remote unit in the system is associated with the current operating mode of that unit.) After completing step 309, the program returns to step 302.

Returning to step 306, if no mode change notice has been received, the program branches to step 310. If a remote unit has requested a call to another remote unit, the program branches at step 310 to step 313. Otherwise, the program branches to step 311. If a telephone caller has requested a call to a remote unit, the program branches at step 311 to step 312 wherein the base station requests the ID of the called remote unit from the telephone caller. The base station requests the remote unit's ID by transmitting a stored voice message through speech synthesizer 106. After completing step 312, the program proceeds to step 313. If a request for a telephone to portable call has not been received by the base station, the program branches at step 311 to step 302.

If the called unit is busy, the program branches at step 313 to step 316 wherein the call originator is informed that the call could not be completed, and the call originator is given options as to how to proceed. This information is conveyed to the caller through speech synthesizer 106. In next step 317, if the caller selects the "store numeric page" option, the program branches to step 333 wherein the numeric information is received from the caller and stored in memory 105. The caller typically enters this information through the keypad of the remote unit or telephone. If entered through a telephone keypad, the numeric information is transmitted over the telephone lines as a DTMF code and is subsequently decoded by DTMF encoder/decoder 103. If the caller selects the "voice page storage" option, the program branches at step 318 to step 319. If an error occurs or the caller chooses not to proceed, the program branches from step 318 to step 302 through step 332.

In step 319, if the called unit is not in the Call Screening mode, the program branches to step 320 wherein the call originator's voice message is stored for later retrieval. If the called unit is in the Call Screening mode, the program branches at step 319 to step 321 wherein the voice message from the call originator is not only stored, but also transmitted to the called unit. If the message being stored and transmitted by the call originator has not been completed, the program branches at step 322 to step 323 wherein the base station inquires as to whether the called unit has transmitted a request to "pickup" the call from the call originator. If a call pickup has not been requested, the program branches back and forth between steps 322 and 323 until the message is completed (or a pickup code is received) whereupon the program branches to step 302. If the called station has requested a pickup, the program branches at step 323 to step 324 wherein the message being stored is cancelled and a normal voice connection is established between the call originator and the called unit. After completing step 324, the program returns to step 302.

Returning to step 313, if the called unit is not busy, the program branches to step 314 wherein the base station initiates a call to the called remote unit. In next step 315, the base station looks for an acknowledgement code to be transmitted back from the called remote unit . If this acknowledgement code is not received, the base station assumes that the remote unit is out of range (or out of service) and the program branches at step 315 to step 316. If the acknowledgement code is received, the program branches at step 315 to step 326.

In step 326, base station controller 104 checks table 105A to determine the present operating mode of the called unit. In the alternative, the operating mode may be stored in the remote unit and transmitted back to the base station as part of the acknowledgement transmission. If the called unit is in the Open Communication mode, the program branches at step 326 to step 327 wherein the call is processed to the remote unit. In next step 325, if the called unit has not answered the call, the program branches to step 316 wherein the call originator is given the option to leave a message. If the called unit answers the call, the program branches at step 325 back to step 302 after the call has been completed.

Returning to step 326, if the called unit is in the Message Storage mode, the program branches to step 328 wherein the call originator is informed that the particular called unit is in the Message Storage mode, and the call originator is given options as to how to proceed. As before, this information is conveyed to the call originator through speech synthesizer 106. If the call originator knows the Message Storage mode Override code for the called unit, and the call originator enters the Override code in response to an interrogation from speech synthesizer 106, the program branches at step 329 to step 327, thereby overriding the Message Storage mode. If the call originator does not enter the Override code, the program branches at step 329 to step 330. In step 330, the call originator is given the option to send a numeric page. If the call originator chooses this option, the program branches to step 331 whereupon a numeric page is sent to the called unit. If the call originator chooses not to send a numeric page, the program branches at step 330 to step 317.

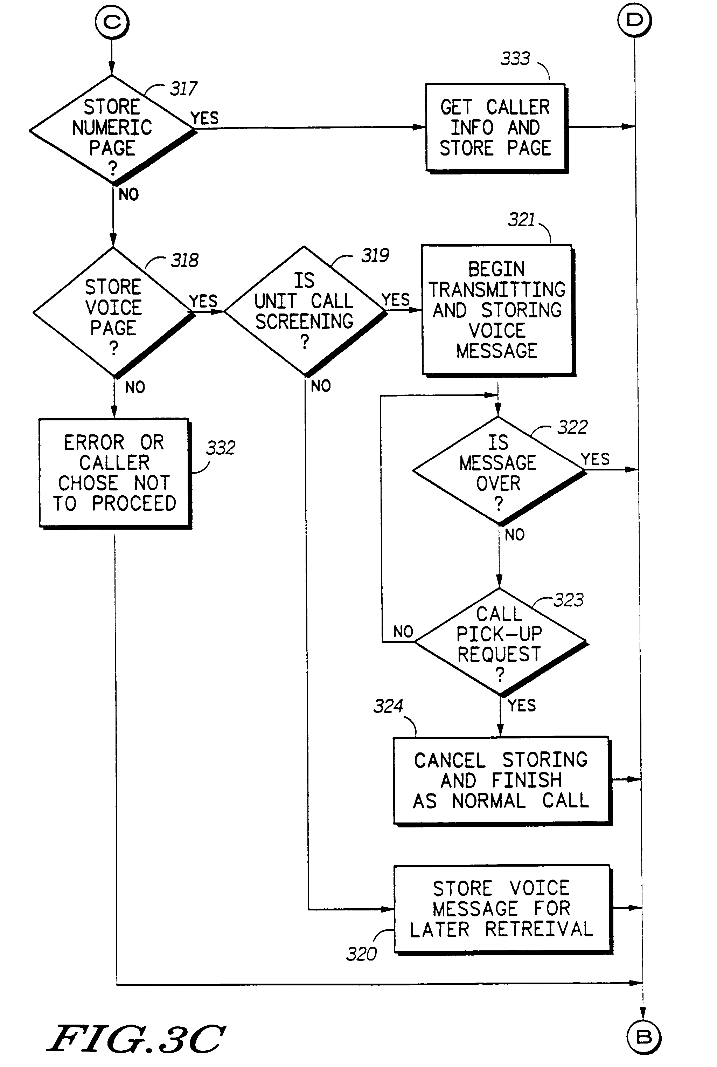

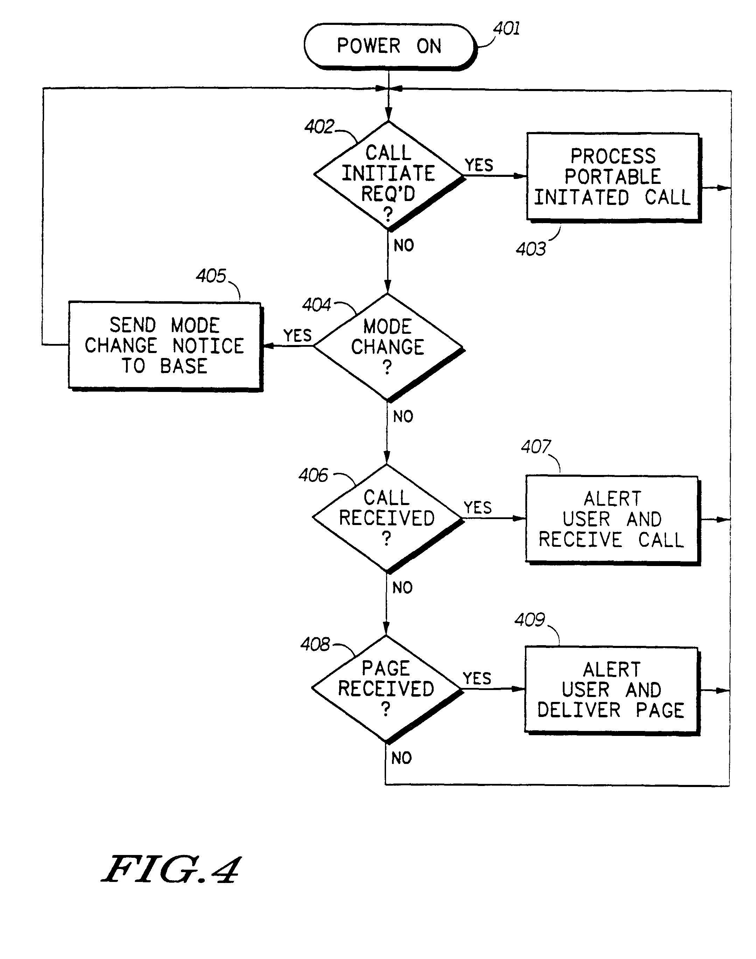

Fig. 4 is a flow chart of the software for the remote unit controller. Referring to this figure, the program begins at Power On at step 401. If a request to originate a call to a telephone or another remote unit has been entered on the keypad of this particular remote unit, the program branches at step 402 to step 403 whereupon the request is processed and the appropriate code for the request is transmitted back to the base station. Upon receiving a call initiate request from a remote unit, the base station processes this request as described above with reference to Fig. 3. If a mode change is entered on the keypad (or mode selection switch) of the remote unit, the program branches at step 404 to step 405 whereupon the appropriate code corresponding to the newly selected operating mode is transmitted back to the base station. If a call has been received, the program branches at step 406 to step 407 wherein the remote unit is alerted as to the incoming call and voice communications are established between the call originator and the remote unit. If a page has been received, the program branches at step 408 to step 409 whereupon the remote unit alerts the operator and delivers the page. If the page is a voice page, the page will be routed through the audio interface to the speaker of the remote unit. If the page is a digital page, the page will be routed through the controller to the display of the remote unit.

## Claims

1. A radio communications system, comprising in
combination a remote unit and a radio base station, said remote unit comprising a transceiver means (202) for transmitting radio signals to and receiving radio signals from the base station, and selecting means (207) for selecting one of a plurality of operating modes, said operating modes including at least a message storage mode and a communication mode, said radio base station comprising means for communicating (104) with a call originator,
said radio communication system characterized by said remote unit having a means for transmitting a code indicative of the selected operating mode, and the base station having base station transceiver means (107) for transmitting radio signals to and receiving radio signals from said remote unit; code storing means (105), coupled to said base station transceiver means (107), for storing the code transmitted by said remote unit and received by said base station transceiver means (107); message storing means (105), coupled to said communicating means (104), for storing a message from said call originator when the code stored in said code storing means (105) is indicative of said message storage mode; and communication means (101, 109, 110), coupled to said communicating means (104) and said base station transceiver means (107), for establishing communications between said call originator and said remote unit when the code stored in said code storage means (105) is indicative of said communication mode.

2. The communications system of claim 1, wherein: said operating modes further includes a call screening mode; said message storing means (105) further includes means for storing a message when the code stored in said code storing means (105) is indicative of said call screening mode; and said base station further includes means for transmitting said message to said remote unit when the code stored in said code storing means (105) is indicative of said call screening mode.

3. The communications system of claim 1, wherein said communication means further includes means for establishing communications between said call originator and said remote unit when the code stored in said code storing means (105) is indicative for said message storage mode and a code representing an override command has been received from said call originator.

4. A radio base station, for use with a remote radio transceiver unit (202), said base station comprising means for communicating with a call originator, and
characterized by said remote unit having a means for transmitting (202, 203, 210) a code indicative of a selected operating mode, and the base station having base station transceiver means (107) for transmitting radio signals to and receiving radio signals from said remote unit; code storing means (105) for storing the code transmitted by said remote unit and received by said base station transceiver means (107); message storage means (105), coupled to said communicating means (104), for storing a message from said call originator when the code stored in said code storing means (105) is indicative a message storage mode; and communication means (101, 109, 110), coupled to said communicating means (104) and said base station transceiver means (107), for establishing communications between said call originator and said remote unit when the code stored in said code storing means (105) is indicative of a communication mode.

5. The base station of claim 4, wherein said message storing means (105) further includes means for storing a message when the code stored in said code storing means (105) is indicative of said call screening mode; and said base station further includes means for transmitting (104, 109, 107) a message stored in said message storing means to said remote unit when the code stored in said code storing means (105) is indicative at said call screening mode.

6. The base station of claim 4, wherein said communication means further includes means for establishing communications between said call originator and said remote unit when the code stored in said code storing means (105) is indicative for said message storage mode and a code representing an override command has been received from said call originator.

7. The base station of claim 4 wherein said message storage means (105) includes means for storing a message from said call originator when said remote unit is out of radio transmission range of said base station.

8. A remote radio unit for use with a radio base station that includes means for communicating (104) with a call originator, said remote unit comprising in combination a remote unit transceiver means (202) for transmitting radio signals to and receiving radio signals from said base station, selecting means (207) for selecting on a plurality of operating modes,
and characterized by the base station having code storing means (105) for storing a code transmitted by said remote unit, and message storing means (105) for storing a message from said call originator, said operating modes including at least a message storage mode and a communication mode, and the remote radio unit having:
means for transmitting (202, 203, 210) a first code indicative of said message storage mode, such that, transmitting said first code to said base station instructs said base station to store a message from said call originator; and means for transmitting a second code indicative of said communication mode, such that, transmitting said second code to said base station instructs said base station to establish communications between said call originator and said remote unit.

9. The remote unit of claim 8, wherein said operating modes further include a call screening made; and said remote unit further includes means for transmitting a third code indicative of said call screening mode, such that, transmitting said third code to said base station instructs said base station to store a message from said call originator and to transmit the message from said call originator to said remote unit.

10. The remote unit of claim 8, further comprising means for transmitting an acknowledge code to said base station in response to a transmission from said base station, such that, the failure of said base station to receive said acknowledge code instructs said base station to store messages from said call originator.

## Patentansprüche

1. Funkverkehrssystem, das in Kombination eine entfernte Einheit und eine Funkbasisstation umfaßt, wobei die entfernte Einheit eine Transceivereinrichtung (202), die Funksignale an die Basisstation sendet und Funksignale von ihr empfängt, und eine Auswahleinrichtung (207) umfaßt, die eine von einer Mehrzahl von Betriebsarten auswählt, wobei die Betriebsarten wenigstens eine Nachrichtenspeicherungsbetriebsart und eine Kommunikationsbetriebsart umfassen, wobei die Funkbasisstation eine Einrichtung zum Kommunizieren (104) Mit einem Anrufer umfaßt,
wobei das Funkverkehrssystem gekennzeichnet ist durch die entfernte Einheit mit einer Einrichtung, die einen die gewählte Betriebsart anzeigenden Code sendet, und die Basistation mit einer BasistationTransceivereinrichtung (107), die Funksignale an die entfernte Einheit sendet und Funksignale von ihr empfängt; eine Codespeichereinrichtung (105), die Mit der Basistation-Transceivereinrichtung (107) verbunden ist und den durch die entfernte Einheit gesendeten und durch die Basistation-Transceivereinrichtung (107) empfangenen Code speichert; eine Nachrichtenspeichereinrichtung (105), die Mit der Kommunikationseinrichtung (104) verbunden ist und eine Nachricht des Anrufers speichert, wenn der in der Codespeichereinrichtung (105) gespeicherte Code die Nachrichtenspeicherungsbetriebsart anzeigt, und eine Komnunikationseinrichtung (101, 109, 110), die mit der Kommunikationseinrichtung (104) und der Basistation-Transceivereinrichtung (107) verbunden ist und Verbindungen zwischen dem Anrufer und der entfernten Einheit herstellt, wenn der in der Codespeichereinrichtung (105) gespeicherte Code die Kommunikationsbetriebsart anzeigt.

2. verkehrssystem nach Anspruch 1, bei dem: die Betriebsarten weiter eine Anrufsiebungsbetriebsart umfassen; die Nachrichtenspeichereinrichtung (105) weiter eine Einrichtung umfaßt, die eine Nachricht speichert, wenn der in der Codespeichereinrichtung (105) gespeicherte Code die Anrufsiebungsbetriebsart anzeigt, und die Basisstation weiter eine Einrichtung umfaßt, die die Nachricht an die entfernte Einheit sendet, wenn der in der Codespeichereinrichtung (105) gespeicherte Code die Anrufsiebungsbetriebsart anzeigt.

3. Verkehrssystem nach Anspruch 1, bei den die Kommunikationseinrichtung weiter eine Einrichtung umfaßt, die Verbindungen zwischen dem Anrufer und der entfernten Einheit herstellt, wenn der in der Codespeichereinrichtung (105) gespeicherte Code die Nachrichtenspeicherungsbetriebsart anzeigt und ein Code, der einen Vorrangbefehl darstellt, von dem Anrufer empfangen worden ist.

4. Funkbasisstation zur Verwendung mit einer entfernten Funktransceivereinheit (202), wobei die Basisstation eine Einrichtung zum Kommunizieren mit einem Anrufer umfaßt, und
gekennzeichnet durch die entfernte Einheit mit einer Einrichtung zum Senden (202, 203, 210) eines eine gewählte Betriebsart anzeigenden Codes, und die Basisstation mit einer Basisstation-Transceivereinrichtung (107), die Funksignale an die entfernte Einheit sendet und Funksignale von ihr empfängt; eine Codespeichereinrichtung (105), die den durch die entfernte Einheit gesendeten und durch die Basistation-Transceivereinrichtung (107) empfangenen Code speichert; eine Nachrichtenspeichereinrichtung (105), die Mit der Kommunikationseinrichtung (104) verbunden ist und eine Nachricht des Anrufers speichert, wenn der in der Codespeichereinrichtung (105) gespeicherte Code eine Nachrichtenspeicherungsbetriebsart anzeigt, und eine Kommunikationseinrichtung (101, 109, 110), die mit der Kommunikationseinrichtung (104) und der Basistation-Transceivereinrichtung (107) verbunden ist und Verbindungen zwischen dem Anrufer und der entfernten Einheit herstellt, wenn der In der Codespeichereinrichtung (105) gespeicherte Code eine Kommunikationsbetriebsart anzeigt.

5. Basisstation nach Anspruch 4, bei der die Nachrichtenspeichereinrichtung (105) weiter eine Einrichtug umfaßt, die eine Nachricht speichert, wenn der in der Codespeichereinrichtung (105) gespeicherte Code die Anrulfsiebungsbetriebsart anzeigt, und die Basisstation weiter eine Einrichtung zum Senden (104, 109, 107) einer in der Nachrichtenspeichereinrichtung gespeicherten Nachricht an die entfernte Einheit umfaßt, wenn der in der Codespeichereinrichtung (105) gespeicherte Code die Anrufsiebungsbetriebsart anzeigt.

6. Basisstation nach Anspruch 4, bei der die Kommunikationseinrichtung weiter eine Einrichtung umfaßt, die Verbindungen zwischen dem Anrufer und der entfernten Einheit herstellt, wenn der in der Codespeichereinrichtung (105) gespeicherte Code die Nachrichtenspeicherungsbetriebsart anzeigt und ein Code, der einen Vorrangbefehl darstellt, von dem Anrufer empfangen worden ist.

7. Basisstation nach Anspruch 4, bei der die Nachrichtenspeichereinrichtung (105) eine Einrichtung umfaßt, die eine Nachricht des Anrufers speichert, wenn die entfernte Einheit sich außerhalb des Funkübertragungsbereiches der Basisstation befindet.

8. Entfernte Funkeinheit zur Verwendung mit einer Funkbasisstation, die eine Einrichtung zum Kommunizieren (104) mit einem Anrufer enthält, wobei die entfernte Einheit in Kombination eine Transceivereinrichtung (202), die Funksignale an die Basisstation sendet und Funksignale von ihr empfängt, und eine Auswahleinrichtung (207) umfaßt, die eine von einer Mehrzahl von Betriebsarten auswählt,
und dadurch gekennzeichnet, daß die Basisstation eine Codespeichereinrichtung (105) zum Speichern eines durch die entfernte Einheit gesendeten Codes und eine Nachrichtenspeichereinrichtung (105) zum Speichern einer Nachricht des Anrufers aufweist, wobei die Betriebsarten wenigstens eine Nachrichtenspeicherungsbetriebsart und eine Kommunikatlonsbetrlebsart umfassen und die entfernte Funkeinheit aufweist:
eine Einrichtung zum Senden (202, 203, 210) eines ersten die Nachrichtenspeicherungsbetriebsart anzeigenden Codes, so daß das Senden des ersten Codes an die Basisstation die Basisstation anwelst, eine Nachricht des Anrufers zu speichern, und eine Einrichtung zum Senden eines zweiten die Kommunikationsbetriebsart anzeigenden Codes, so daß das Senden des zweiten Codes an die Basisstation die Basisstation anweist, Verbindungen zwischen dem Anrufer und der entfernten Einheit herzustellen.

9. Entfernte Einheit nach Anspruch 8, bei der die Betriebsarten weiter eine Anrufsiebungsbetriebsart umfassen und die entfernte Einheit weiter eine Einrichtung zum Senden eines dritten die Anrufsiebungsbetriebsart anzeigenden Codes umfaßt, so daß das Senden des dritten Codes an die Basisstation die Basisstation anweist, eine Nachricht des Anrufers zu speichern und die Nachricht des Anrufers an die entfernte Einheit zu senden.

10. Entfernte Einheit nach Anspruch 8, weiter umfassend eine Einrichtung, die als Reaktion auf eine Übertragung von der Basisstation einen Bestätigungscode an die Basisstation sendet, so daß das Mißlingen der Basisstation, den Bestätigungscode zu empfangen, die Basisstation anweist, Nachrichten des Anrufers zu speichern.

## Revendications

1. Système de radiocommunications comprenant, en combinaison, un poste à distance et une station radio de base, ledit poste à distance comprenant un moyen émetteur-récepteur (202) pour émettre des signaux radio vers la station de base et pour en recevoir des signaux radio ; et un moyen de choix (207) pour choisir l'un de plusieurs modes de fonctionnement, lesdits modes de fonctionnement comprenant au moins un mode mémorisation de message et un mode communication, ladite station radio de base comprenant un moyen de communication (104) pour communiquer avec un émetteur d'appel ;
ledit système de radiocommunications étant caractérisé en ce que ledit poste à distance comporte un moyen d'émission pour émettre un code indicatif du mode de fonctionnement choisi, et en ce que la station de base possède un moyen émetteur-récepteur de station de base (107) pour émettre des signaux radio vers ledit poste à distance et pour en recevoir des signaux radio ; un moyen de mémorisation de code (105), lié audit moyen émetteur-récepteur de station de base (107), pour mémoriser le code émis par ledit poste à distance et reçu par ledit moyen émetteur-récepteur de station de base (107) ; un moyen de mémorisation de message (105), relié audit moyen de communication (104), pour mémoriser un message provenant dudit émetteur d'appel lorsque le code mémorisé dans ledit moyen de mémorisation de code (105) indique ledit mode mémorisation de message ; et un moyen de mise en communication (101, 109, 110), relié audit moyen communication (104) et audit moyen émetteur-récepteur de station de base (107), pour établir des communications entre ledit émetteur d'appel et ledit poste à distance lorsque le code mémorisé dans ledit moyen de mémorisation de code (105) indique ledit mode communication.

2. Système de communications selon la revendication 1, dans lequel lesdits modes de fonctionnement comprennent, en outre, un mode filtrage d'appel ; dans lequel ledit moyen de mémorisation de message (105) comprend, en outre, un moyen pour mémoriser un message lorsque le code mémorisé dans ledit moyen de mémorisation de code (105) indique ledit mode filtrage d'appel ; et dans lequel ladite station de base comprend, en outre, un moyen d'émission pour émettre ledit message vers ledit poste à distance lorsque le code mémorisé dans ledit moyen de mémorisation de code (105) indique ledit mode filtrage d'appel.

3. Système de communications selon la revendication 1, dans lequel ledit moyen de communication comprend, en outre, un moyen pour établir des communications entre ledit émetteur d'appel et ledit poste à distance lorsque le code mémorisé dans ledit moyen de mémorisation de code (105) indique ledit mode mémorisation de message et si un code représentant une instruction de priorité a été reçu dudit émetteur d'appel.

4. Station radio de base, pour utilisation avec un poste émetteur-récepteur radio à distance (202), ladite station de base comprenant un moyen de communication avec un émetteur d'appel ; et
caractérisé en ce que ledit poste à distance comporte un moyen d'émission (202, 203, 210) pour émettre un code indicatif d'un mode de fonctionnement choisi, et en ce que la station de base possède un moyen émetteur-récepteur de station de base (107) pour émettre des signaux radio vers ledit poste à distance et pour en recevoir des signaux radio ; un moyen de mémorisation de code (105) pour mémoriser le code émis par ledit poste à distance et reçu par ledit moyen émetteur-récepteur de station de base (107) ; un moyen de mémorisation de message (105), relié audit moyen de communication (104), pour mémoriser un message provenant dudit émetteur d'appel lorsque le code mémorisé dans ledit moyen de mémorisation de code (105) indique un mode mémorisation de message ; et un moyen de mise en communication (101, 109, 110), relié audit moyen communication (104) et audit moyen émetteur-récepteur de station de base (107), pour établir des communications entre ledit émetteur d'appel et ledit poste à distance lorsque le code mémorisé dans ledit moyen de mémorisation de code (105) indique ledit mode communication.

5. Station de base selon la revendication 4, dans laquelle ledit moyen de mémorisation de message (105) comprend, en outre, un moyen pour mémoriser un message lorsque le code mémorisé dans ledit moyen de mémorisation de code (105) indique ledit mode filtrage d'appel ; et ladite station de base comprenant, en outre, un moyen d'émission (104, 109, 107) pour émettre un message, mémorisé dans ledit moyen de mémorisation de message, vers ledit poste à distance lorsque le code mémorisé dans ledit moyen de mémorisation de code (105) indique ledit mode filtrage d'appel.

6. Station de base selon la revendication 4, dans laquelle ledit moyen communication comprend, en outre, un moyen pour établir des communications entre ledit émetteur d'appel et ledit poste à distance lorsque le code mémorisé dans ledit moyen de mémorisation de code (105) indique ledit mode mémorisation de message et si un code représentant une instruction de priorité a été reçu dudit émetteur d'appel.

7. Station de base selon la revendication 4, dans laquelle ledit moyen de mémorisation de message (105) comprend un moyen pour mémoriser un message provenant dudit émetteur d'appel lorsque ledit poste à distance est hors de portée d'émission radio de ladite station de base.

8. Poste radio à distance pour utilisation avec une station radio de base qui comprend un moyen de communication (104) pour communiquer avec un émetteur d'appel, ledit poste à distance comprenant, en combinaison, un moyen émetteur-récepteur à distance (202) pour émettre des signaux radio vers ladite station de base et pour en recevoir des signaux radio ; et un moyen de choix (207) pour choisir l'un de plusieurs modes de fonctionnement ;
et caractérisé en ce que la station de base comporte un moyen de mémorisation de code (105) pour mémoriser un code émis par ledit poste à distance, et un moyen de mémorisation de message (105) pour mémoriser un message provenant dudit émetteur d'appel, lesdits modes de fonctionnement incluant au moins un mode mémorisation de message et un mode communication, et en ce que le poste radio à distance comporte:
un moyen d'émission (202, 203, 210) pour émettre un premier code indicatif dudit mode mémorisation de message, de sorte que l'émission dudit premier code vers ladite station de base donne l'ordre à ladite station de base de mémoriser un message provenant dudit émetteur d'appel ; et un moyen d'émission pour émettre un deuxième code indicatif dudit mode communication, de sorte que l'émission dudit second code vers ladite station de base donne l'ordre à ladite station de base d'établir des communications entre ledit émetteur d'appel et ledit poste à distance.

9. Poste à distance selon la revendication 8, dans lequel lesdits modes de fonctionnement comprennent, en outre, un mode filtrage d'appel ; et en ce que ledit poste à distance comprend, en outre, un moyen d'émission pour émettre un troisième code indicatif dudit mode filtrage d'appel, de sorte que l'émission dudit troisième code vers ladite station de base donne l'ordre à ladite station de base de mémoriser un message provenant dudit émetteur d'appel et d'émettre le message provenant dudit émetteur d'appel vers ledit poste à distance.

10. Poste à distance selon la revendication 8, comprenant en outre, un moyen d'émission pour émettre un code d'accusé de réception vers ladite station de base en réponse à une émission provenant de ladite station de base, de sorte que le défaut de réception de ladite station de base dudit code d'accusé de réception donne l'ordre à ladite station de base de mémoriser des messages provenant dudit émetteur d'appel.
